# EUROPEAN PATENT SPECIFICATION

(11) **EP 4 213 237 B1**
(45) Date of publication and mention of the grant of the patent: **29.07.2026**
(21) Application number: 22816476.0
(22) Date of filing: 02.06.2022
(51) Int. Cl.: H01M 4/485, H01M 4/131, H01M 4/36, H01M 4/38, H01M 4/48, H01M 4/525, H01M 4/62, H01M 10/0525

(54) **LITHIUM SECONDARY BATTERY AND MANUFACTURING METHOD THEREFOR**
LITHIUMSEKUNDÄRBATTERIE UND HERSTELLUNGSVERFAHREN DAFÜR
BATTERIE SECONDAIRE AU LITHIUM ET SON PROCÉDÉ DE FABRICATION

(30) Priority: 03.06.2021 KR 20210071872
(43) Date of publication of application: 19.07.2023
(73) Proprietor: LG Energy Solution, Ltd., Seoul 07335 (KR)
(72) Inventor: JO, Chi Ho, Daejeon 34122 (KR); JUNG, Wang Mo, Daejeon 34122 (KR); KIM, Hye Hyeon, Daejeon 34122 (KR); YOO, Tae Gu, Daejeon 34122 (KR); HWANG, Jin Tae, Daejeon 34122 (KR); JUNG, Hae Jung, Daejeon 34122 (KR); HEO, Jong Wook, Daejeon 34122 (KR)
(74) Representative: Hoffmann Eitle
(86) International application number: PCT/KR2022/007846
(87) International publication number: WO 2022/255817

(56) References cited:
- EP-A1- 3 605 678
- WO-A1-2020/111580
- JP-A- 2003 109 662
- KR-A- 20130 079 109
- KR-A- 20190 064 424
- KR-A- 20190 079 534
- KR-A- 20190 124 038
- KR-A- 20200 066 048
- KR-A- 20210 055 586
- US-A1- 2020 365 904

## Description

### [Technical Field]

The present invention relates to a lithium secondary battery containing a positive electrode additive capable of supplementing lithium ions lost in an irreversible reaction and a method of manufacturing the same.

### [Background Art]

As technology development and demand for mobile devices increase, the demand for secondary batteries as an energy source is rapidly increasing. Among these secondary batteries, lithium secondary batteries that have a high energy density, a high operating potential, a long cycle life and a low self-discharging rate have been widely studied, also commercialized and used in various fields.

Recently, as lithium secondary batteries are used as a power source for medium-to-large devices such as electric vehicles, the high capacity, high energy density and low cost of a lithium secondary battery are further required. Accordingly, research on an irreversible positive electrode additive that can improve capacity during subsequent charging/discharging by supplementing lithium ions lost by an irreversible reaction occurring at a negative electrode in initial charging has been actively conducted, and irreversible additives such as Li₂NiO₂ and Li₆CoO₄ have been developed.

However, such a conventional irreversible additive is generally prepared by reacting excess lithium oxide and a precursor such as cobalt oxide or nickel oxide. The irreversible additive prepared as described above is structurally unstable and generates a large amount of oxygen gas (O₂) as charging progresses, and the generated oxygen gas may cause volume expansion of an electrode assembly to be served as one of the main causes triggering the decrease in battery performance.

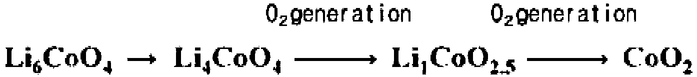

In addition, such an irreversible additive may be transformed into a thermally unstable structure when stored at a high temperature of 60 °C or more after initial charging/discharging, and thus oxygen gas may be additionally released, and there is a limit to self-discharging of a battery.

Therefore, it is necessary to develop a lithium secondary battery that uses an irreversible additive in a positive electrode not only to realize a high operating voltage, but also to enhance the safety of the battery and improve self-discharging due to reduced oxygen gas generation in activation and subsequent high-temperature storage.

### [Related Art Document]

### [Patent Document]

Korean Unexamined Patent Application Publication No. 10-2019-0078392

US 2020/365904 A1 describes a cathode additive of a lithium secondary battery, and a method for preparing the same. The cathode additive includes a compound represented by 1:y(Li₂Ni₁₋ₓMₓO₂)-z(Li₆Co₁₋ₓMₓO₄) where M is one or more elements selected from the group consisting of P, B, F, W, Ti and Zr, 0≤x<1.0, y and z are molar ratios of Li₂Ni₁₋ₓMₓO₂ and Li₆Co₁₋ₓMₓO₄ contained in the compound and y:z is 2:1 to 30: 1.

EP 3605678A1 describes a lithium secondary battery, comprising: an anode composed of a single layer of an anode current collector; a cathode containing a cathode mixture formed on a cathode current collector; a separator interposed between the anode and the cathode; and an electrolyte, wherein the cathode mixture comprises an irreversible compensating additive.

KR 20130079109A describes a positive electrode active material for a lithium secondary battery comprises an intercalation and de-intercalation-available lithiated intercalation compound; and a metal oxide represented by 1:LiₓM_{y}M'_{(1-y)}O₄ where M is selected from Co, Ni, Mn, Fe, and a combination thereof; M' is selected from Co, Ni, Mn, Fe, Al, Mg, Zn, Ti, and combinations thereof; but M and M' are different from each other; and 5.00≤x≤6.05 and 0≤y≤1.

KR 20190124038A describes a lithium secondary battery comprising a negative electrode manufactured through a dry process and having a fibrous binder component.

WO 2020/111580 A1 describes a cathode additive for a lithium secondary battery which is represented by Li₆ₓCo_{1-y}M_{y}O₄ where 0.9≤x≤1.1, 0<y≤0.1, M_{y} is BₐW_{b}, 0≤a≤0.1, 0≤b≤0.1, and a and b are simultaneously not 0. The cathode additive comprises: a core represented by Li₆ₓCoO₄ where 0.9≤x≤1.1, and a coating layer comprising boron and/or tungsten.

### [Disclosure]

### [Technical Problem]

Therefore, the present invention is directed to providing a lithium secondary battery, which uses an irreversible additive in a positive electrode not only to realize a high operating voltage, but also to enhance the safety of the battery and improve self-discharging due to reduced oxygen gas generation in activation and subsequent high-temperature storage.

### [Technical Solution]

To solve the above problems,
one aspect of the present invention provides a lithium secondary battery, which includes:
a positive electrode including a positive electrode current collector, and a positive electrode mixture layer disposed on the positive electrode current collector and containing a positive electrode active material and a positive electrode additive represented by Formula 1 below;
wherein the positive electrode active material is a lithium metal composite oxide represented by Formula 2 below,
and wherein the content of the positive electrode additive is 0.01 to 5 parts by weight with respect to a total of 100 parts by weight of the positive electrode mixture layer; and
a negative electrode including a negative electrode current collector, and a negative electrode mixture layer disposed on the negative electrode current collector, wherein the positive electrode additive has a ratio (CC/DC) of initial charge capacity (CC) to initial discharge capacity (DC) during initial charging/discharging of 50 to 100, wherein the ratio (CC/DC) of initial charge capacity (CC) to initial discharge capacity (DC) during initial charging/discharging is determined in accordance with the method described later in the description:

   [Formula 1] LiₚCo_{(1-q)}M¹_{q}O₄
in Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.4, respectively;

   [Formula 2] Liₓ[Ni_{y}Co_{z}Mn_{w}M²ᵥ]Oᵤ
in Formula 2,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01≤z≤0.5, 0<w≤0.5, 0≤v≤0.2, and 1.5≤u≤4.5, respectively.

Specifically, the ratio (CC/DC) of initial charge capacity (CC) to initial discharge capacity (DC) during initial charging/discharging may be 60 to 80, wherein the ratio (CC/DC) of initial charge capacity (CC) to initial discharge capacity (DC) during initial charging/discharging is determined in accordance with the method described later in the description.

In addition, the positive electrode mixture layer may have a weight change ratio before and after initial charging/discharging of 0.01 to 2.00%, wherein the weight change rate before and after initial charging/discharging is determined in accordance with the method described later in the description.

Moreover, the positive electrode additive contained in the positive electrode mixture layer may have a tetragonal structure with a space group of P4₂/nmc.

In addition, the positive electrode mixture layer may include 0.1 to 5 parts by weight of a conductive material with respect to the total weight, and as a usable conductive material, one or more selected from the group consisting of natural graphite, artificial graphite, carbon black, acetylene black, Ketjen black, and carbon fiber may be included.

In addition, the negative electrode mixture layer includes a carbon material and a silicon material, and the content of the silicon material may be 1 to 20 parts by weight with respect to 100 parts by weight of the negative electrode mixture layer.

Here, the carbon material may include one or more selected from the group consisting of natural graphite, artificial graphite, graphene, carbon nanotubes, carbon black, acetylene black, Ketjen black and carbon fiber.

In addition, the silicon material may include one or more of a silicon (Si) particle and a silicon oxide (SiOx, 1≤x≤2) particle.

Further, another aspect of the present invention provides a method of manufacturing the lithium secondary battery of the invention, which includes a step of:
applying a current of 1C or less to a lithium secondary battery, which includes a positive electrode including a positive electrode current collector; and a positive electrode mixture layer disposed on the positive electrode current collector and containing a positive electrode active material and a positive electrode additive represented by Formula 1 below, and
a negative electrode including a negative electrode current collector; and a negative electrode mixture layer disposed on the negative electrode current collector, to initially charge the lithium secondary battery,
wherein, during the initial charging/discharging, the ratio (CC/DC) of an initial charge capacity (CC) to an initial discharge capacity (DC) of the positive electrode additive is 50 to 100, wherein the ratio (CC/DC) of initial charge capacity (CC) to initial discharge capacity (DC) during initial charging/discharging is determined in accordance with the method described later in the description;
the initial charging step is performed at a temperature condition of 20 to 70 °C;
the initial charging step is performed on the lithium secondary battery under a pressure condition of 490 to 88260 kPa (5 to 900 kgf/cm²); and
and wherein the initial charging step comprises:
   first activation step for applying a current of 0.05C to 0.2C to a lithium secondary battery to charge to an SOC of 30% or less;
   second activation step for applying a current of 0.3C to 0.5C to the lithium secondary battery that has undergone the first activation to charge to an SOC of more than 30% and less than 70%; and
   third activation step for applying a current of 0.6C to 0.9C to the lithium secondary battery that has undergone the second activation to charge to an SOC of 70% or more:

      [Formula 1] LiₚCo_{(1-q)}M¹_{q}O₄
   in Formula 1,
   M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
   p and q are 5≤p≤7 and 0≤q≤0.4, respectively.

### [Advantageous Effects]

In a lithium secondary battery according to the present invention, a positive electrode additive represented by Formula 1 as an irreversible additive is included in a positive electrode mixture layer, and a ratio (CC/DC) of an initial charge capacity (CC) to an initial discharge capacity (DC) is adjusted within a specific range, thereby reducing the amount of oxygen gas generated in the charging/discharging of the lithium secondary battery, and at the same time, preventing self-discharging and improving an operating voltage by inhibiting a decrease in open circuit voltage (OCV) of the battery in initial charging/discharging and/or subsequent high-temperature storage. Therefore, the lithium secondary battery including the same can be effectively used as a power source for mid-to-large devices such as electric vehicles.

### [Brief Description of the Drawings]

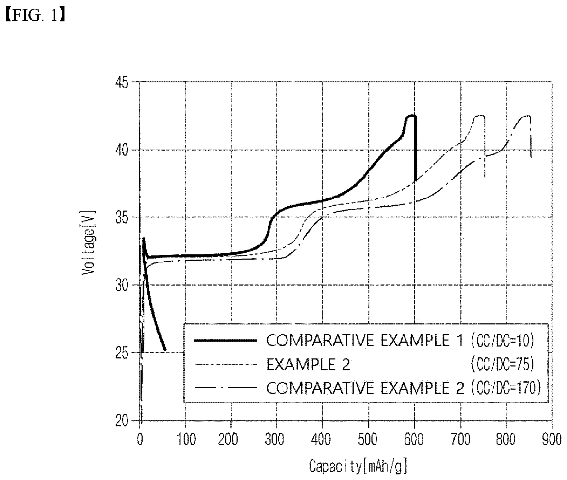

FIG. 1 is a graph illustrating the charge capacity by ratio of the charge capacity (CC) and the discharge capacity (DC) of a positive electrode additive during initial charging/discharging.
FIG. 2 is a graph illustrating the cumulative gas generation by ratio of the charge capacity (CC) and the discharge capacity (DC) of a positive electrode additive during initial charging/discharging at 45 °C.
FIG. 3 is a graph illustrating the cumulative gas generation by ratio of the charge capacity (CC) and the discharge capacity (DC) of a positive electrode additive according to the charging/discharging cycle in 4-week storage at 60 °C.
FIG. 4 is a graph illustrating the open circuit voltage (OCV) by ratio of the charge capacity (CC) and the discharge capacity (DC) of a positive electrode additive according to the charging/discharging cycle in 4-week storage at 60 °C.

### [Detailed Description of the Preferred Embodiments]

The terms "comprise," "include" and "have" used herein designate the presence of characteristics, numbers, steps, actions, components or members described in the specification or a combination thereof, but it should be understood that these terms do not preclude the possibility of the presence or addition of one or more other characteristics, numbers, steps, actions, components, members or a combination thereof.

In addition, when a part of a layer, film, region or plate is disposed "on" another part, this includes not only a case in which one part is disposed "directly on" another part, but also a case in which still another part is interposed therebetween. In contrast, when a part of a layer, film, region or plate is disposed "under" another part, this includes not only a case in which one part is disposed "directly under" another part, but also a case in which still another part is interposed therebetween. In addition, in this application, "on" may include not only a case of disposed on an upper part but also a case of disposed on a lower part.

Moreover, the "main component" used herein may be a component contained at 50 wt% or more, 60 wt% or more, 70 wt% or more, 80 wt% or more, 90wt% or more, 95 wt% or more, or 97.5 wt% or more with respect to the total weight of a composition or specific component, and in some cases, when the main component constitutes the entire composition or specific component, it may be contained at 100 wt%.

In addition, the "Ah" used herein refers to a capacity unit of a lithium secondary battery, and is also called "ampere hour," meaning a current amount per hour. For example, when the battery capacity is "3000 mAh," it means that a battery can be discharged with a current of 3000 mA for 1 hour.

Hereinafter, the present invention will be described in further detail.

### Lithium secondary battery

In one embodiment of the present invention, a lithium secondary battery which includes
a positive electrode including a positive electrode current collector; and a positive electrode mixture layer disposed on the positive electrode current collector and containing a positive electrode active material and a positive electrode additive represented by Formula 1 below,
wherein the positive electrode active material is a lithium metal composite oxide represented by Formula 2 below,
and wherein the content of the positive electrode additive is 0.01 to 5 parts by weight with respect to a total of 100 parts by weight of the positive electrode mixture layer; and
a negative electrode including a negative electrode current collector; and a negative electrode mixture layer disposed on the negative electrode current collector, and
wherein the positive electrode additive has a ratio (CC/DC) of an initial charge capacity (CC) to an initial discharge capacity (DC) of 50 to 100, wherein the ratio (CC/DC) of initial charge capacity (CC) to initial discharge capacity (DC) during initial charging/discharging is determined in accordance with the method described later:

   [Formula 1] LiₚCo_{(1-q)}M¹_{q}O₄
in Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.4, respectively;

   [Formula 2] Liₓ[Ni_{y}Co_{z}Mn_{w}M²ᵥ]Oᵤ
in Formula 2,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01≤z≤0.5, 0<w≤0.5, 0≤v≤0.2, and 1.5≤u≤4.5, respectively.

The lithium secondary battery according to the present invention includes a positive electrode and a negative electrode, and a separator may be interposed between the positive electrode and the negative electrode or excluded. In addition, the positive electrode and the negative electrode has a structure impregnated with an electrolyte for the migration of lithium ions (Li⁺) between them.

Here, the positive electrode may include a positive electrode mixture layer formed by coating, drying and pressing a positive electrode slurry including a positive electrode active material and a positive electrode additive on the positive electrode current collector, and the positive electrode mixture layer may selectively further include a conductive material, a binder, and other additives as needed.

The positive electrode active material is a lithium metal composite oxide represented by Formula 2 below enabling reversible intercalation/deintercalation:

[Formula 2] Liₓ[Ni_{y}Co_{z}Mn_{w}M²ᵥ]Oᵤ

in Formula 2,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0≤w≤0.5, 0≤v≤0.2, and 1.5≤u≤4.5, respectively.

The lithium metal composite oxide represented by Formula 2 may include one or more compounds selected from the group consisting of LiNi_{1/3}Co_{1/3}Mn_{1/3}O₂, LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, and LiNi_{0.7}Co_{0.1}Mn_{0.1}Al_{0.1}O₂.

In addition, the content of the positive electrode active material may be 85 to 95 parts by weight, specifically, 88 to 95 parts by weight, 90 to 95 parts by weight, 86 to 90 parts by weight, or 92 to 95 parts by weight with respect to 100 parts by weight of the positive electrode mixture layer.

Moreover, the positive electrode mixture layer includes a positive electrode additive imparting an irreversible capacity along with a positive electrode active material exhibiting electrical activity, wherein the positive electrode additive includes a lithium metal oxide represented by Formula 1 below:

[Formula 1] LiₚCo_{(1-q)}M¹_{q}O₄

in Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.4, respectively.

The positive electrode additive may contain lithium in excess to provide lithium for lithium consumption caused by an irreversible, chemical and physical reaction at a negative electrode upon initial charging, i.e., activation, thereby increasing charge capacity, reducing irreversible capacity, and improving lifetime characteristics.

Among positive electrode additives, the positive electrode additive represented by Formula 1 may have a higher content of lithium ions than a nickel-containing oxide that is commonly used in the art, and thus can replenish lithium ions lost in an irreversible reaction during the initial activation of the battery, so the charge/discharge capacity of the battery can be significantly improved. In addition, compared to the iron and/or manganese-containing oxide(s) commonly used in the art, there is no side reaction caused by the elution of a transition metal during the charging/discharging of the battery, so excellent stability of the battery is exhibited.

Examples of the lithium metal oxides represented by Formula 1 may include Li₆CoO₄, Li₆Co_{0.5}Zn_{0.5}O₄, and Li₆Co_{0.7}Zn_{0.3}O₄.

In addition, the lithium cobalt oxide represented by Formula 1 may have a tetragonal crystalline structure, and among the tetragonal crystal structures, may be included in a space group of P4₂/nmc having a twisted tetrahedral structure consisting of a cobalt element and an oxygen element. Since the positive electrode additive has a twisted tetrahedral structure consisting of a cobalt element and an oxygen element and thus is structurally unstable, a large amount of oxygen gas may be generated in initial charging/discharging (that is, activation) and/or subsequent charging/discharging, thereby reducing battery performance and safety due to the volume expansion of an electrode assembly; and when stored at high temperature of 60 °C or more after initial charging/discharging, the positive electrode additive is transformed into a thermally unstable structure, so oxygen gas is additionally released and there is a limit to the self-discharge of the battery.

However, the lithium secondary battery according to the present invention includes a positive electrode additive represented by Formula 1, and the charge/discharge capacity ratio (CC/DC) of the positive electrode additive during the initial charging/discharging is adjusted within a specific range, thereby reducing the amount of oxygen gas generated in the charging/discharging of the lithium secondary battery, and also inhibiting self-discharging and improving an operating voltage by improving the open circuit voltage of the battery in initial activation and subsequent high-temperature storage.

Specifically, the lithium secondary battery has a ratio (CC/DC) of the charge capacity (CC) to the discharge capacity (DC) of the positive electrode additive in initial charging/discharging of 50 to 100. For example, the lithium secondary battery may have a ratio (CC/DC) of the charge capacity (CC) to the discharge capacity (DC) of the positive electrode additive in initial charging/discharging of 50 to 90; 50 to 75; 50 to 70; 60 to 90; 60 to 80; 60 to 70; 75 to 100; 65 to 75; or 70 to 78. The ratio (CC/DC) of the charge capacity (CC) to the discharge capacity (DC) of the positive electrode additive may be adjusted according to the type or content of the positive electrode additive contained in the positive electrode mixture layer, and in some cases, may be controlled by initial charging/discharging conditions. In the present invention, by adjusting the initial charge/discharge capacity ratio (CC/DC) of the positive electrode additive to satisfy the above range, the amount of oxygen gas generated in the charging/discharging of the lithium secondary battery may be reduced, and the open circuit voltage of the battery may be improved in initial charging/discharging and subsequent high-temperature storage, thereby inhibiting self-discharging and improving an operating voltage. Specifically, when the ratio (CC/DC) exceeds 100, a considerable decrease in open circuit voltage of the battery in high-temperature storage may be prevented, and when the ratio (CC/DC) is significantly low, i.e., less than 50, the generation of a large amount of gas during charging/discharging after battery activation may be improved.

In addition, the lithium secondary battery may have a weight change rate of the positive electrode mixture layer before and after the initial charging/discharging of 0.01 to 2.00%, and specifically, 0.01 to 1.80%; 0.01 to 1.60%; 0.01 to 1.50%; 0.01 to 1.40%; 0.1 to 1.20%; 0.01 to 1.00%; 0.01 to 0.08%; 0.01 to 0.06%; 0.01 to 0.05%; 0.01 to 0.04%; 0.04 to 0.4%; 0.04 to 0.5%; 0.04 to 1.0%; 0.04 to 1.5%; 0.05 to 1.0%; 0.08 to 0.5%; 1.0 to 2.0%; 1.5 to 2.0%; 0.05 to 0.9%; 0.2 to 1.7%; 1.0 to 1.7%; or 0.1 to 0.8%.

In the present invention, by adjusting the weight change rate of the positive electrode mixture layer before and after the initial charging/discharging of the lithium secondary battery within the above range, the amount of oxygen gas generated in the charging/discharging of the lithium secondary battery may be reduced, and the open circuit voltage of the battery may also be improved in initial charging/discharging and subsequent high-temperature storage, thereby inhibiting self-discharging and improving an operating voltage.

In addition, the positive electrode additive is included at 0.01 to 5 parts by weight with respect to 100 parts by weight of the positive electrode mixture layer, and specifically, 0.01 to 4 parts by weight; 0.01 to 3 parts by weight; 0.01 to 2 parts by weight; 0.01 to 1 part by weight; 0.5 to 2 parts by weight; 0.1 to 0.9 parts by weight; 0.2 to 1.5 parts by weight; or 1 to 2 parts by weight with respect to 100 parts by weight of the positive electrode mixture layer. In the present invention, by adjusting the content of the positive electrode additive within the above range, a decrease in charge/discharge capacity caused by insufficient supplementation of lithium ions lost in an irreversible reaction due to a low content of the positive electrode additive may be prevented, and the generation of a large amount of oxygen gas during the charging/discharging of the battery due to an excess positive electrode additive may be prevented.

Further, the positive electrode mixture layer may further include a conductive material, a binder, or an additive in addition to the positive electrode active material and the positive electrode additive.

Here, the conductive material may be used to improve the performance of the positive electrode, such as electric conductivity, and may include one or more selected from the group consisting of natural graphite, artificial graphite, graphene, carbon nanotubes, carbon black, acetylene black, Ketjen black, and carbon fiber. For example, the conductive material may include acetylene black.

In addition, the conductive material may be included at 0.1 to 5 parts by weight, and specifically, 0.5 to 4 parts by weight; 1 to 3.5 parts by weight; or 0.5 to 1.5 parts by weight with respect to 100 parts by weight of the positive electrode mixture layer.

Moreover, the binder may include one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and a copolymer thereof. In one example, the binder may include polyvinylidene fluoride.

In addition, the binder may be included at 1 to 10 parts by weight, and specifically, 2 to 8 parts by weight; or 1 to 5 parts by weight with respect to a total of 100 parts by weight of the positive electrode mixture layer.

Moreover, the average thickness of the positive electrode mixture layer is not particularly limited, but specifically, may be 50 to 300 µm, and more specifically, 100 to 200 µm; 80 to 150 µm; 120 to 170 µm; 150 to 300 µm; 200 to 300 µm; or 150 to 190 µm.

In addition, in the positive electrode, a material that has high conductivity without causing a chemical change in the battery may be used as a positive electrode current collector. For example, as the positive electrode collector, stainless steel, aluminum, nickel, titanium, or calcined carbon may be used, and in the case of aluminum or stainless steel, one that is surface treated with carbon, nickel, titanium or silver may also be used. In addition, the positive electrode current collector may have fine irregularities formed on a surface thereof to increase the adhesion of the positive electrode active material, and may be formed in various shapes such as a film, a sheet, a foil, a net, a porous body, a foam body, and a non-woven fabric body. Moreover, the average thickness of the current collector may be appropriately applied within 3 to 500 µm in consideration of the conductivity and total thickness of the positive electrode to be manufactured.

Meanwhile, the negative electrode may include a negative electrode mixture layer prepared by coating, drying and pressing a negative electrode active material on a negative electrode current collector, and if needed, a conductive material, a binder, and other additives may selectively be further included optionally in the negative electrode mixture layer, like the positive electrode.

In addition, the negative electrode active material may include, for example, a carbon material and a silicon material. The carbon material refers to a carbon material including a carbon atom as a main component, and examples of the carbon material may include graphite having a completely layered crystalline structure such as natural graphite, soft carbon having a low crystalline layered crystalline structure (graphene structure; a structure in which hexagonal honeycomb planes of carbon are arranged in layers) and hard carbon in which the above-described structures are mixed with amorphous parts, artificial graphite, expanded graphite, carbon nanofibers, non-graphitizing carbon, carbon black, acetylene black, Ketjen black, carbon nanotubes, fullerenes, activated carbon, and graphene, and preferably, one or more selected from the group consisting of natural graphite, artificial graphite, graphene and carbon nanotubes. More preferably, the carbon material includes natural graphite and/or artificial graphite, and may include any one or more of graphene and carbon nanotubes in addition to the natural graphite and/or artificial graphite. In this case, the carbon material may include 50 to 95 parts by weight, and more specifically, 60 to 90 parts by weight or 70 to 80 parts by weight of graphene and/or carbon nanotubes with respect to a total of 100 parts by weight of the carbon material.

In addition, the silicon material is a particle including silicon (Si), which is a metal component, as a main component, and may include one or more of silicon (Si) particles and silicon oxide (SiO_{X}, 1≤X≤2) particles. In one example, the silicon material may include silicon (Si) particles, silicon monoxide (SiO) particles, silicon dioxide (SiO₂) particles, or a mixture thereof.

Moreover, the silicon material may have a form in which crystalline particles and amorphous particles are mixed, and the proportion of the amorphous particles may be 50 to 100 parts by weight, and specifically, 50 to 90 parts by weight; 60 to 80 parts by weight, or 85 to 100 parts by weight based on a total of 100 parts by weight of the silicon material. In the present invention, thermal stability and flexibility may be improved without degrading the electrical properties of an electrode by controlling the proportion of the amorphous particles included in the silicon material to the above range.

In addition, the negative electrode active material contains a carbon material and a silicon material, and the silicon material may be included at 1 to 20 parts by weight, and particularly, 5 to 20 parts by weight; 3 to 10 parts by weight; 8 to 15 parts by weight; 13 to 18 parts by weight; or 2 to 7 parts by weight based on 100 parts by weight of the negative electrode mixture layer.

In the present invention, an amount of lithium consumption and an irreversible capacity loss during the initial charging/discharging of the battery may be reduced and charge capacity per unit mass may also be improved by adjusting the contents of the carbon material and the silicon material included in the negative electrode active material to the above range.

In one example, the negative electrode active material may include 95±2 parts by weight of graphite; and 5±2 parts by weight of a mixture in which silicon monoxide (SiO) particles and silicon dioxide (SiO₂) particles are uniformly mixed with respect to 100 parts by weight of the negative electrode active material. In the present invention, an amount of lithium consumption and an irreversible capacity loss during the initial charging/discharging of the battery may be reduced and charge capacity per unit mass may also be improved by adjusting the contents of the carbon material and the silicon material included in the negative electrode active material to the above range.

In addition, the negative electrode mixture layer may have an average thickness of 100 to 200 µm, and specifically, 100 to 180 µm, 100 to 150 µm, 120 to 200 µm, 140 to 200 µm, or 140 to 160 µm.

Moreover, the negative electrode current collector is not particularly limited as long as it does not cause a chemical change in the battery and has high conductivity, and for example, copper, stainless steel, nickel, titanium, or calcined carbon may be used, and in the case of copper or stainless steel, one whose surface is treated with carbon, nickel, titanium or silver may be used. In addition, the negative electrode current collector, like the positive electrode current collector, has fine irregularities on a surface thereof to reinforce the adhesion of the positive electrode active material and may be formed in various shapes such as a film, a sheet, a foil, a net, a porous body, a foam body, and a non-woven fabric body. In addition, the average thickness of the negative electrode current collector may be suitably applied within 3 to 500 µm in consideration of the conductivity and total thickness of the negative electrode to be manufactured.

Further, in the lithium secondary battery according to the present invention, a separator may be interposed between the positive electrode and the negative electrode. Here, as the separator, an insulating thin film, which is interposed between a positive electrode and a negative electrode and has high ion permeability and mechanical strength, is used. The separator is not particularly limited as long as it is conventionally used in the art, and specifically, a sheet or non-woven fabric made of chemically-resistant and hydrophobic polypropylene, glass fiber, or polyethylene may be used. **In** some cases, a composite separator in which a porous polymer base material such as a sheet or non-woven fabric is coated with inorganic/organic particles by an organic binder polymer may be used. When a solid electrolyte such as a polymer is used as an electrolyte, the solid electrolyte may also serve as a separator. Moreover, the separator may have a pore diameter of 0.01 to 10 µm and a thickness of 5 to 300 µm on average.

Meanwhile, the positive electrode and the negative electrode may be wound in a jelly roll shape and accommodated in a cylindrical, prismatic or pouch-type battery, or accommodated in a pouch-type battery in a folding or stack-and-folding form, but the present invention is not limited thereto.

**In** addition, a lithium salt-containing electrolyte according to the present invention may consist of an electrolyte and a lithium salt, and as the electrolyte, a non-aqueous organic solvent, an organic solid electrolyte, or an inorganic solid electrolyte may be used.

As the non-aqueous organic solvent, for example, aprotic organic solvents such as N-methyl-2-pyrrolidinone, ethylene carbonate, propylene carbonate, butylene carbonate, dimethyl carbonate, diethyl carbonate, γ-butyrolactone, 1,2-dimethyoxy ethane, tetrahydroxyfuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used.

As the organic solid electrolyte, for example, polymers such as a polyethylene derivative, a polyethylene oxide derivative, a polypropylene oxide derivative, a phosphoric acid ester polymer, poly alginate lysine, polyester sulfide, polyvinyl alcohol, polyvinylidene fluoride, and polymers including an ionic dissociation group may be used.

As the inorganic solid electrolyte, for example, a nitride, halide or sulfate of lithium such as Li₃N, LiI, Li₅Ni₂, Li₃N-LiI-LiOH, LiSiO₄, LiSiO₄-LiI-LiOH, Li₂SiS₃, Li₄SiO₄, Li₄SiO₄-LiI-LiOH, or Li₃PO₄-Li₂S-SiS₂ may be used.

The lithium salt is a material that is readily soluble in the non-aqueous electrolyte, and may be, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lower aliphatic carboxylic acid lithium, lithium tetraphenylborate, or lithium imide.

In addition, to improve charging/discharging characteristics and flame retardancy, for example, pyridine, triethylphosphite, triethanolamine, cyclic ether, ethylene diamine, n-glyme, hexamethylphosphoric acid triamine, a nitrobenzene derivative, sulfur, a quinone imine dye, N-substituted oxazolidinone, N, N-substituted imidazolidine, ethylene glycol dialkyl ether, an ammonium salt, pyrrole, 2-methoxy ethanol, or aluminum trichloride may be added to the electrolyte. In some cases, to impart incombustibility, a halogen-containing solvent such as carbon tetrachloride or ethylene trifluoride may be further included, and to enhance high-temperature storage properties, carbon dioxide gas may be further included, and fluoro-ethylene carbonate (FEC) or propene sultone (PRS) may be also included.

### Method of manufacturing lithium secondary battery

Further, in one embodiment, the present invention provides a method of manufacturing a lithium secondary battery, which includes a step of:
applying a current of 1C or less to a lithium secondary battery, which includes a positive electrode including a positive electrode current collector; and a positive electrode mixture layer disposed on the positive electrode current collector and containing a positive electrode active material and a positive electrode additive represented by Formula 1 below, and
a negative electrode including a negative electrode current collector; and a negative electrode mixture layer disposed on the negative electrode current collector, to initially charge the lithium secondary battery,
wherein, during the initial charging/discharging, the ratio (CC/DC) of an initial charge capacity (CC) to an initial discharge capacity (DC) of the positive electrode additive is 50 to 100, wherein the ratio (CC/DC) of initial charge capacity (CC) to initial discharge capacity (DC) during initial charging/discharging is determined in accordance with the description;
the initial charging step is performed at a temperature condition of 20 to 70 °C;
the initial charging step is performed on the lithium secondary battery under a pressure condition of 490 to 88260 kPa (5 to 900 kgf/cm²); and
and wherein the initial charging step comprises:
   first activation step for applying a current of 0.05C to 0.2C to a lithium secondary battery to charge to an SOC of 30% or less;
   second activation step for applying a current of 0.3C to 0.5C to the lithium secondary battery that has undergone the first activation to charge to an SOC of more than 30% and less than 70%; and
   third activation step for applying a current of 0.6C to 0.9C to the lithium secondary battery that has undergone the second activation to charge to an SOC of 70% or more:

      [Formula 1] LiₚCo_{(1-q)}M¹_{q}O₄
   In Formula 1,
   M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
   p and q are 5≤p≤7 and 0≤q≤0.4, respectively.

The method of manufacturing a lithium secondary battery according to the present invention may include applying a current to the above-described lithium secondary battery, which includes a positive electrode including a positive electrode current collector, and a positive electrode mixture layer disposed on the positive electrode current collector and containing a positive electrode active material and a positive electrode additive represented by Formula 1 below; and a negative electrode including a negative electrode current collector, and a negative electrode mixture layer disposed on the negative electrode current collector to perform initial charging. Here, the current applied to the lithium secondary battery is 1C or less, so the ratio (CC/DC) of initial charge capacity (CC) to initial discharge capacity (DC) during initial charging/discharging can be adjusted to be in a range of 50 to 100.

Specifically, the initial charging is implemented by continuously performing a three-step charging process, that is, one to three steps of activation.

More specifically, the initial charging step is performed by first activation step for applying a current of 0.05C to 0.2C to a lithium secondary battery to charge to an SOC of 30% or less; second activation step for applying a current of 0.3C to 0.5C to the lithium secondary battery that has undergone the first activation step to charge to an SOC of more than 30% and less than 70%; and third activation step for applying a current of 0.6C to 0.9C to the lithium secondary battery that has undergone the second activation step to charge to an SOC of 70% or more.

In one example, the initial charging step may be performed by first activation step for applying a current of 0.08C to 0.15C to a lithium secondary battery to charge to an SOC of 30% or less; second activation step for applying a current of 0.35C to 0.45C to the lithium secondary battery that has undergone the first activation step to charge to an SOC of more than 30% and less than 70%; and a third activation step for applying a current of 0.65C to 0.8C to the lithium secondary battery that has undergone the second activation step to charge to an SOC of 70% or more.

In the present invention, by controlling the current value so that the current applied to the lithium secondary battery is 1 C or less during initial charging, but is gradually increased as SOC increases, a SEI film may be uniformly formed on the negative electrode mixture layer, and it is possible to prevent the dissociation of lithium ions by the positive electrode active material before the positive electrode additive at a considerably low current or the deterioration of electricity due to the induction of overlithiation of the positive electrode additive caused by a current exceeding 1C.

**In** addition, the initial charging step may be performed at a temperature condition higher than room temperature in order to lower the resistance of an electrode. Specifically, each stage of activation is performed under a temperature condition of 20 to 70 °C, and more specifically, 20 to 60 °C; 20 to 40 °C; 20 to 25 °C; 40 to 60 °C; 45 to 60 °C; 50 to 65 °C; 50 to 60 °C; 52 to 58 °C; 40 to 50 °C; or 42 to 48 °C. **In** the present invention, when the initial charging is carried out under the above temperature condition, the secondary battery can be charged under a lower resistance condition of the positive electrode, so charging efficiency may increase and the uniformity of the SEI film formed on the negative electrode mixture layer may be improved.

Meanwhile, in the initial charging, the outer surface of the lithium secondary battery may be pressurized concurrently with charging of the lithium secondary battery or sequentially after the charging using a using a pressurizing device such as a jig, and the pressurizing may be performed at 490 to 88260 kPa (5 to 900 kgf/cm²) for 4 to 6 seconds.

Moreover, discharging of the lithium secondary battery after initial charging may be further included, and in this case, the discharging may be performed under a current condition of 0.1 to 1 C, and specifically, 0.1 to 0.9 C; 0.1 to 0.8 C; 0.1 to 0.6 C; 0.1 to 0.5 C; 0.5 to 1 C; 0.2 to 0.8 C; or 0.4 to 0.6 C.

Further, the method of manufacturing a lithium secondary battery according to the present invention may further include aging the charged lithium secondary battery after the initial charging. The aging may allow the SEI film to be more stabilized and reformed to a uniform thickness by thermal energy and electrochemical energy. To this end, the aging may be performed at 20 to 80 °C, and specifically, 30 to 70 °C or 45 to 65 °C for 0.5 to 30 hours.

According to the method of manufacturing a lithium secondary battery according to the present invention, the initial charge/discharge capacity ratio (CC/DC) of the positive electrode additive represented by Formula 1, contained in the positive electrode mixture layer, and/or the weight ratio of the positive electrode mixture layer before and after the initial charging/discharging may be easily controlled in the above-described ranges of the present invention, and thus, not only the amount of oxygen gas generated during the charging/discharging of the manufactured lithium secondary battery may be reduced, but also the open-circuit voltage of the battery may be improved in initial activation and/or subsequent high-temperature storage, thereby inhibiting self-discharging and improving an operating voltage. Therefore, the lithium secondary battery of the present invention can be effectively used as a power source of a mid-to-large devices such as electric vehicles.

### [Examples]

Hereinafter, the present invention will be described in further detail with reference to examples and an experimental example.

### Examples 1 to 4 and Comparative Examples 1 to 4. Manufacture of lithium secondary battery

A positive electrode slurry for a lithium secondary battery was prepared by injecting N-methyl pyrrolidone into a homo mixer, weighing and inputting 97.8 parts by weight of a positive electrode active material LiNi_{0.6}Co_{0.2}Mn_{0.2}O₂ and a positive electrode additive Li₆CoO₄ or Li₆Co_{0.7}Zn_{0.3}O₄; 0.7 parts by weight of a conductive material, which is a mixture of carbon nanotubes (average size: 60±10 nm) and Denka black (average size: 2±0.5 µm) (75:25 wt./wt.); and 1.5 parts by weight of a binder PVdF with respect to 100 parts by weight of the solid content of the positive electrode slurry, and mixing the resultant at 2,000 rpm for 60 minutes. Here, a positive electrode was manufactured by applying the prepared positive electrode slurry to one surface of an aluminum current collector, drying the slurry at 100 °C, and rolling the resultant. Here, the total thickness of the positive electrode mixture layer was 130 µm, and the total thickness of the manufactured positive electrode was approximately 200 µm.

With respect to 100 parts by weight of the solid content of a negative electrode slurry, 84 parts by weight of a negative electrode active material natural graphite and 14 parts by weight of silicon oxide (SiOx, 1≤x≤2) particles; and 2 parts by weight of a binder styrene butadiene rubber (SBR) were prepared, and a negative electrode slurry was prepared in the same manner as the positive electrode slurry. Here, the graphite used in the formation of the negative electrode mixture layer was natural graphite (average particle diameter: 0.01 to 0.5 µm), and the silicon oxide (SiOx) particle had an average particle size of 0.9 to 1.1 µm. A negative electrode was manufactured by applying the prepared negative electrode slurry to one surface of a copper current collector, drying the slurry at 100 °C and rolling the resultant. Here, the total thickness of the negative electrode mixture layer was 150 µm, and the total thickness of the manufactured negative electrode was approximately 250 µm.

A full-cell type lithium secondary battery was manufactured by stacking a separator (thickness: approximately 16 µm) consisting of a porous polyethylene (PE) film to be interposed between the prepared positive electrode and negative electrode and injecting E2DVC as an electrolyte.

Here, the "E2DVC" refers to a type of carbonate-based electrolyte, which is a mixed solution in which lithium hexafluorophosphate (LiPF₆, 1.0M) and vinyl carbonate (VC, 2 wt%) are added to a mixture of ethylene carbonate (EC): dimethyl carbonate (DMC): diethyl carbonate (DEC) = 1: 1: 1 (volume ratio).

By performing initial charging of the manufactured full cell at 22±2 °C under conditions shown in Table 1 below, the initial charge capacity (CC) and the initial discharge capacity (DC) of the positive electrode additive were measured, and their ratio (CC/DC) was calculated. Here, the potential range of the battery was 2.5 to 4.25V. In addition, the positive electrode was dissembled from the full cell, the positive electrode mixture layer was delaminated from the positive electrode current collector, and the weight of the positive electrode mixture layer was measured after the initial charging/discharging. The weight change rate before and after the initial charging/discharging was deduced from the weights measured before and after the initial charging/discharging.

**[Table 1]**

| | Positive electrode additive | | Initial charging/discharging current condition | | | | CC/ DC | Weight change rate (%) of positive electrode mixture layer |
|---|---|---|---|---|---|---|---|---|
| | Type | Content [parts by weight] | First activation step (SOC≤30 %) | Second activation step (30%<SOC<7 0%) | Third activation step(70%≤ SOC) | Discharging | | |
| Example 1 | Li₆CoO₄ | 0.05 | 0.1C | 0.4C | 0.7C | 0.5C | 76.6 | 0.042~0.33 |
| Example 2 | Li₆CoO₄ | 2 | 0.1C | 0.4C | 0.7C | 0.5C | 75 | 0.1~0.8 |
| Example 3 | Li₆CoO₄ | 5 | 0.1C | 0.4C | 0.7C | 0.5C | 64.2 | 0.25~1.6 |
| Example 4 | Li₆Co_{0.7}Zn_{0.3}O₄ | 2 | 0.1C | 0.4C | 0.7C | 0.5C | 85.5 | 0.2~0.9 |
| Comparative Example 1 | Li₆CoO₄ | 2 | 0.01C | | | 0.5C | 10 | 0.005~ 0.008 |
| Comparative Example 2 | Li₆CoO₄ | 2 | 1.5C | | | 0.5C | 170 | 2.05~2.4 |
| Comparat ive Example 3 | Li₆CoO₄ | 2 | 0.1C | 0.4C | 0.7C | 0.01C | 9.6 | 0.2~0.4 |
| Comparative Example 4 | Li₆CoO₄ | 2 | 0.1C | 0.4C | 0.7C | 2C | 125 | 2.1~2.25 |

### Experimental Example 1.

To confirm the difference in effect according to the ratio (CC/DC) of the initial charge capacity (CC) and the initial discharge capacity (DC) of the positive electrode additive, the following experiment was performed.

### a) Manufacture of lithium secondary battery

To confirm the effect according to the initial charge/discharge capacity ratio of the positive electrode additive contained in the lithium secondary battery, lithium secondary batteries according to Examples 2a and 4a and Comparative Examples 1a to 4a were manufactured in the same manner as described in the corresponding Examples 2 and 4 and Comparative Examples 1 to 4, except that a positive electrode active material was not included and 97.8 parts by weight of a positive electrode additive such as Li₆CoO₄ or Li₆Co_{0.7}Zn_{0.3}O₄ was used with respect to 100 parts by weight of the solid content of a positive electrode slurry.

By performing initial charging of the manufactured full cell at 22±2 °C under conditions shown in Table 2 below, the initial charge capacity (CC) and the initial discharge capacity (DC) of the positive electrode additive were measured, and their ratio (CC/DC) was calculated. Here, the potential range of the battery was 2.5 to 4.25V.

**[Table 2]**

| | Positive electrode additive | Initial charging/discharging current condition | | | | Initial charging/discharging | | |
|---|---|---|---|---|---|---|---|---|
| | Type | First activation step (SOC≤30 %) | Second activation step (30%<SOC<70 %) | Third activation step (70%≤ SOC) | Discharging | | | |
| | | | | | | CC | DC | CC/DC |
| Example 2a | Li₆CoO₄ | 0.1C | 0.4C | 0.7C | 0.5C | 750 | 10 | 75 |
| Example 4a | Li₆Co_{0.7}Zn_{0.3} O₄ | 0.1C | 0.4C | 0.7C | 0.5C | 710 | 8.3 | 85.5 |
| Comparative Example 1a | Li₆CoO₄ | 0.01C | | | 0.5C | 600 | 60 | 10 |
| Comparative Example 2a | Li₆CoO₄ | 1.5C | | | 0.5C | 855 | 5.5 | 170 |
| Comparative Example 3a | Li₆CoO₄ | 0.1C | 0.4C | 0.7C | 0.01C | 750 | 78 | 9.6 |
| Comparati ve Example 4a | Li₆CoO₄ | 0.1C | 0.4C | 0.7C | 2C | 750 | 6 | 125 |

### b) Evaluation of amount of gas generation

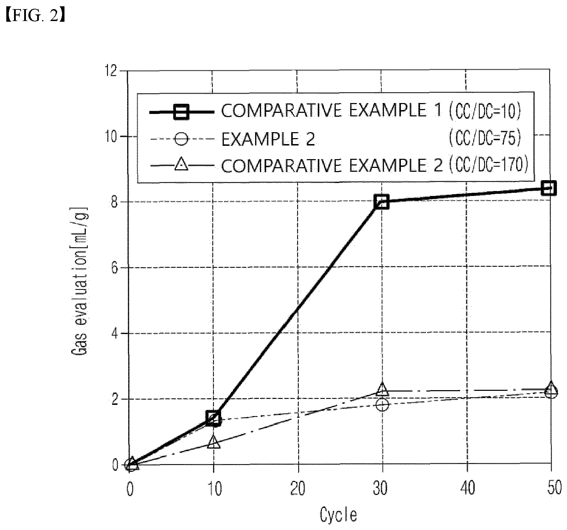

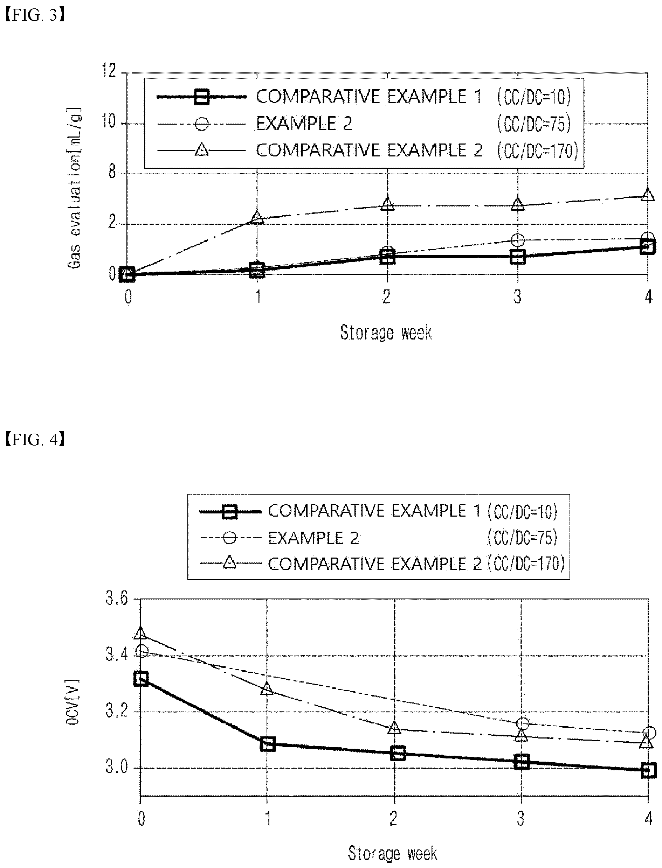

After performing initial charging/discharging on the lithium secondary batteries manufactured in Examples 2a and 4a and Comparative Examples 1a to 4a, for each secondary battery, ① the amounts of gas generated during 50 cycles of repeated charging/discharging at 45 °C under a condition of 0.3C/0.3C and ② the amounts of gas generated in 4-week storage at 60 °C were measured. The results are shown in Table 3 below, and FIGS. 2 and 3.

### c) Evaluation of high-temperature storage characteristic

The lithium secondary batteries manufactured in Examples 2a, 4a and Comparative Examples 1a to 4a were stored at 60 °C for 4 weeks, open circuit voltages (OCV) were measured, and the changed open circuit voltages were calculated based on those before storage. The results are shown in Table 3 below and FIG. 4.

**[Table 3]**

| | Amount of gas generation | | OCV variation (ΔOCV) after 4-week storage [V] |
|---|---|---|---|
| | Cumulative amount after 50 cycles of charging/discharging [ml/g] | Cumulative amount after 4-week storage [ml/g] | |
| Example 2a | 2.1 | 1.5 | 0.28 |
| Example 4a | 2.2 | 1.9 | 0.26 |
| Comparative Example 1a | 2.2 | 1.4 | 0.32 |
| Comparative Example 2a | 8.5 | 6.0 | 0.41 |
| Comparative Example 3a | 2.4 | 2.0 | 0.33 |
| Comparative Example 4a | 2.9 | 1.8 | 0.30 |

As shown in Table 3 and FIGS. 2 to 4, the lithium secondary battery according to the present invention not only has a low amount of gas generated in charging/discharging, but also has improved storage stability at a high temperature, thereby inhibiting a decrease in open circuit voltage (OCV). Therefore, the lithium secondary battery according to the present invention has an advantage of excellent electrical performance.

Specifically, in the case of the lithium secondary batteries manufactured in Examples 2a and 4a that contain the positive electrode additive represented by Formula 1, satisfy a weight change rate of the positive electrode mixture layer in a predetermined range by adjusting the ratio (CC/DC) of the charge capacity (CC) and the discharge capacity (DC) of the positive electrode additive during initial charging/discharging within a specific range, it was confirmed that the amount of cumulative gas generation in charging/discharging after the initial charging/discharging and 4-week high-temperature storage increased according to an increase in content of the positive electrode additive, but decreased in comparison with the same amount. In addition, the lithium secondary batteries of the examples showed a decrease in open circuit voltage variation (ΔOCV) after high-temperature storage.

From the above results, it can be seen that, in the lithium secondary battery according to the present invention, the positive electrode additive represented by Formula 1 as an irreversible additive is included in the positive electrode mixture layer, the ratio (CC/DC) of the charge capacity (CC) and the discharge capacity (DC) of the positive electrode additive in the initial charging/discharging is adjusted within a specific range, thereby reducing the amount of oxygen gas generated in the charging/discharging of the lithium secondary battery, and at the same time, inhibiting self-discharging and improving an operating voltage by improving the open circuit voltage of the battery in initial activation and/or subsequent high-temperature storage.

## Claims

1. A lithium secondary battery, comprising:
a positive electrode including a positive electrode current collector, and a positive electrode mixture layer disposed on the positive electrode current collector and containing a positive electrode active material and a positive electrode additive represented by Formula 1 below,
wherein the positive electrode active material is a lithium metal composite oxide represented by Formula 2 below,
and wherein the content of the positive electrode additive is 0.01 to 5 parts by weight with respect to a total of 100 parts by weight of the positive electrode mixture layer; and
a negative electrode including a negative electrode current collector, and a negative electrode mixture layer disposed on the negative electrode current collector;
wherein the positive electrode additive has a ratio (CC/DC) of initial charge capacity (CC) to initial discharge capacity (DC) during initial charging/discharging of 50 to 100, wherein the ratio (CC/DC) of initial charge capacity (CC) to initial discharge capacity (DC) during initial charging/discharging is determined in accordance with the description:
[Formula 1] LiₚCo_{(1-q)}M¹_{q}O₄
in Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.4, respectively;
[Formula 2] Liₓ[Ni_{y}Co_{z}Mn_{w}M²ᵥ]Oᵤ
in Formula 2,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01≤z≤0.5, 0<w≤0.5, 0≤v≤0.2, and 1.5≤u≤4.5, respectively.

2. The battery of claim 1, wherein the positive electrode additive has a ratio (CC/DC) of an initial charge capacity (CC) to an initial discharge capacity (DC) of 60 to 80, wherein the ratio (CC/DC) of initial charge capacity (CC) to initial discharge capacity (DC) during initial charging/discharging is determined in accordance with the description.

3. The battery of claim 1, wherein the positive electrode mixture layer has a weight change rate before and after initial charging/discharging of 0.01 to 2.00%, wherein the weight change rate before and after initial charging/discharging is determined in accordance with the description.

4. The battery of claim 1, wherein the positive electrode additive has a tetragonal structure with a space group of P4₂/nmc.

5. The battery of claim 1, wherein the positive electrode mixture layer comprises 0.1 to 5 parts by weight of a conductive material with respect to the total weight thereof.

6. The battery of claim 1, wherein the positive electrode mixture layer comprises one or more conducive materials selected from the group consisting of natural graphite, artificial graphite, carbon black, acetylene black, Ketjen black, and carbon fiber.

7. The battery of claim 1, wherein the negative electrode mixture layer comprises a carbon material and a silicon material, and
the content of the silicon material is 1 to 20 parts by weight with respect to 100 parts by weight of the negative electrode mixture layer.

8. The battery of claim 7, wherein the carbon material comprises one or more selected form the group consisting of natural graphite, artificial graphite, graphene, carbon nanotubes, carbon black, acetylene black, Ketjen black and carbon fiber.

9. The battery of claim 8, wherein the silicon material comprises one or more of silicon (Si) particles and silicon oxide (SiOx, 1≤x≤2) particles.

10. A method of manufacturing a lithium secondary battery according to any one of claims 1 to 9, comprising a step of:
applying a current of 1C or less to a lithium secondary battery, which includes a positive electrode including a positive electrode current collector; and a positive electrode mixture layer disposed on the positive electrode current collector and containing a positive electrode active material and a positive electrode additive represented by Formula 1 below, and
a negative electrode including a negative electrode current collector; and a negative electrode mixture layer disposed on the negative electrode current collector, to initially charge the lithium secondary battery,
wherein, during the initial charging/discharging, the ratio (CC/DC) of an initial charge capacity (CC) to an initial discharge capacity (DC) of the positive electrode additive is 50 to 100, wherein the ratio (CC/DC) of initial charge capacity (CC) to initial discharge capacity (DC) during initial charging/discharging is determined in accordance with the description;
the initial charging step is performed at a temperature condition of 20 to 70 °C;
the initial charging step is performed on the lithium secondary battery under a pressure condition of 490 to 88260 kPa (5 to 900 kgf/cm²); and
and wherein the initial charging step comprises:
first activation step for applying a current of 0.05C to 0.2C to a lithium secondary battery to charge to an SOC of 30% or less;
second activation step for applying a current of 0.3C to 0.5C to the lithium secondary battery that has undergone the first activation to charge to an SOC of more than 30% and less than 70%; and
third activation step for applying a current of 0.6C to 0.9C to the lithium secondary battery that has undergone the second activation to charge to an SOC of 70% or more:
[Formula 1] LiₚCo_{(1-q)}M¹_{q}O₄
in Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.4, respectively.

## Patentansprüche

1. Lithium-Sekundärbatterie, umfassend:
eine positive Elektrode, umfassend einen Positivelektroden-Stromabnehmer und eine Positivelektroden-Mischungsschicht, die auf dem Positivelektroden-Stromabnehmer angeordnet ist und ein Positivelektroden-Aktivmaterial und ein durch die nachstehende Formel 1 dargestelltes Positivelektroden-Additiv enthält,
worin das Positivelektroden-Aktivmaterial ein durch die nachstehende Formel 2 dargestelltes Lithium-Metall-Kompositoxid ist,
und worin der Gehalt des Positivelektroden-Additivs 0,01 bis 5 Gewichtsteile beträgt, bezogen auf 100 Gesamt-Gewichtsteile der Positivelektroden-Mischungsschicht; und
eine negative Elektrode, umfassend einen Negativelektroden-Stromabnehmer und eine Negativelektroden-Mischungsschicht, die auf dem Negativelektroden-Stromabnehmer angeordnet ist;
worin das Positivelektroden-Additiv ein Verhältnis (CC/DC) der anfänglichen Ladekapazität (CC) zur anfänglichen Entladekapazität (DC) während des ersten Ladens/Entladens von 50 bis 100 aufweist, worin das Verhältnis (CC/DC) der anfänglichen Ladekapazität (CC) zur anfänglichen Entladekapazität (DC) während des ersten Ladens/Entladens in Übereinstimmung mit der Beschreibung bestimmt wird:
[Formel 1] LiₚCo_{(1-q)}M¹_{q}O₄
worin in Formel 1
M¹ eines oder mehrere Elemente ist, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und
p und q 5≤p≤7 bzw. 0≤q≤0,4 erfüllen;
[Formel 2] Liₓ[Ni_{y}Co_{z}Mn_{w}M²ᵥ]Oᵤ
worin in Formel 2
M² eines oder mehrere Elemente ist, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo und
x, y, z, w, v und u 1, 0≤x≤1,30, 0, 1≤y≤0,95, 0,01≤z≤0,5, 0<w≤0,5, 0≤v≤0,2 bzw. 1,5≤u≤4,5 erfüllen.

2. Batterie gemäß Anspruch 1, worin das Positivelektroden-Additiv ein Verhältnis (CC/DC) der anfänglichen Ladekapazität (CC) zur anfänglichen Entladekapazität (DC) von 60 bis 80 aufweist, worin das Verhältnis (CC/DC) der anfänglichen Ladekapazität (CC) zur anfänglichen Entladekapazität (DC) während des ersten Ladens/Entladens in Übereinstimmung mit der Beschreibung bestimmt wird.

3. Batterie gemäß Anspruch 1, worin die Positivelektroden-Mischungsschicht eine Gewichtsveränderungsrate vor und nach dem ersten Laden/Entladen von 0,01 bis 2,00 % aufweist, worin die Gewichtsveränderungsrate vor und nach dem ersten Laden/Entladen in Übereinstimmung mit der Beschreibung bestimmt wird.

4. Batterie gemäß Anspruch 1, worin das Positivelektroden-Additiv eine tetragonale Struktur der Raumgruppe P4₂/nmc aufweist.

5. Batterie gemäß Anspruch 1, worin die Positivelektroden-Mischungsschicht 0,1 bis 5 Gewichtsteile eines leitfähigen Materials umfasst, bezogen auf deren Gesamtgewicht.

6. Batterie gemäß Anspruch 1, worin die Positivelektroden-Mischungsschicht eines oder mehrere leitfähige Materialien umfasst, ausgewählt aus der Gruppe bestehend aus natürlichem Graphit, künstlichem Graphit, Ruß, Acetylen-Ruß, Ketjen-Ruß und Kohlefaser.

7. Batterie gemäß Anspruch 1, worin die Negativelektroden-Mischungsschicht ein Kohlenstoffmaterial und ein Siliciummaterial umfasst, und
der Gehalt des Siliciummaterials 1 bis 20 Gewichtsteile beträgt, bezogen auf 100 Gewichtsteile der Negativelektroden-Mischungsschicht.

8. Batterie gemäß Anspruch 7, worin das Kohlenstoffmaterial eines oder mehrere umfasst, ausgewählt aus der Gruppe bestehend aus natürlichem Graphit, künstlichem Graphit, Graphen, Kohlenstoff-Nanoröhrchen, Ruß, Acetylen-Ruß, Ketjen-Ruß und Kohlefaser.

9. Batterie gemäß Anspruch 8, worin das Siliciummaterial eines oder mehrere von Silicium (Si)-Partikeln und Siliciumoxid (SiOx, 1≤x≤2)-Partikeln umfasst.

10. Verfahren zur Herstellung einer Lithium-Sekundärbatterie gemäß irgendeinem der Ansprüche 1 bis 9, umfassend die Schritte:
Anlegen eines Stroms von 1C oder kleiner an eine Lithium-Sekundärbatterie, die eine positive Elektrode, umfassend einen Positivelektroden-Stromabnehmer; und eine Positivelektroden-Mischungsschicht, die auf dem Positivelektroden-Stromabnehmer angeordnet ist und ein Positivelektroden-Aktivmaterial und ein durch die nachstehende Formel 1 dargestelltes Positivelektroden-Additiv umfasst, und
eine negative Elektrode, umfassend einen Negativelektroden-Stromabnehmer; und eine Negativelektroden-Mischungsschicht, die auf dem Negativelektroden-Stromabnehmer angeordnet ist, umfasst, um die Lithium-Sekundärbatterie erstmalig zu laden,
worin während des ersten Ladens/Entladens das Verhältnis (CC/DC) der anfänglichen Ladekapazität (CC) zur anfänglichen Entladekapazität (DC) des Positivelektroden-Additivs 50 bis 100 beträgt, worin das Verhältnis (CC/DC) der anfänglichen Ladekapazität (CC) zur anfänglichen Entladekapazität (DC) während des ersten Ladens/Entladens in Übereinstimmung mit der Beschreibung bestimmt wird;
worin das erste Laden bei einer Temperatur von 20 bis 70°C durchgeführt wird;
das erste Laden der Lithium-Sekundärbatterie bei einem Druck von 490 bis 88.260 kPa (5 bis 900 kgf/cm²) durchgeführt wird; und
worin das erste Laden umfasst:
einen ersten Aktivierungsschritt zum Anlegen eines Stroms von 0,05C bis 0,2C an eine Lithium-Sekundärbatterie, um auf einen SOC von 30 % oder weniger zu laden;
einen zweiten Aktivierungsschritt zum Anlegen eines Stroms von 0,3C bis 0,5C an die Lithium-Sekundärbatterie, die der ersten Aktivierung unterzogen worden ist, um auf einen SOC von größer als 30 % und weniger als 70 % zu laden; und
einen dritten Aktivierungsschritt zum Anlegen eines Stroms von 0,6C bis 0,9C an die Lithium-Sekundärbatterie, die der zweiten Aktivierung unterzogen worden ist, um auf einen SOC auf 70 % oder mehr zu laden:
[Formel 1] LiₚCO_{(1-q)}M¹_{q}O₄
worin in Formel 1
M¹ eines oder mehrere Elemente ist, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und
p und q 5≤p≤7 bzw. 0≤q≤0,4 erfüllen.

## Revendications

1. Batterie secondaire au lithium, comprenant :
une électrode positive incluant un collecteur de courant d'électrode positive, et une couche de mélange d'électrode positive disposée sur le collecteur de courant d'électrode positive et contenant un matériau actif d'électrode positive et un additif d'électrode positive représenté par la Formule 1 ci-dessous,
dans laquelle le matériau actif d'électrode positive est un oxyde composite de lithium métallique représenté par la Formule 2 ci-dessous,
et dans laquelle la teneur en additif d'électrode positive est de 0,01 à 5 parties en poids par rapport à un total de 100 parties en poids de la couche de mélange d'électrode positive ; et,
une électrode négative incluant un collecteur de courant d'électrode négative, et une couche de mélange d'électrode négative disposée sur le collecteur de courant d'électrode négative ;
dans laquelle l'additif d'électrode positive présente un rapport (CC/DC) de capacité de charge initiale (CC) sur la capacité de décharge initiale (DC) lors de la charge/décharge initiale de 50 à 100, dans laquelle le rapport (CC/DC) de capacité de charge initiale (CC) sur la capacité de décharge initiale (DC) lors de la charge/décharge initiale est déterminé conformément à la description :
[Formule 1] LiₚCo_{(1-q)}M¹_{q}O₄
dans la Formule 1,
M¹ est un ou plusieurs éléments sélectionnés parmi le groupe consistant en W, Cu, Fe, V, Cr, Ti, Zr, Zn, Al, In, Ta, Y, La, Sr, Ga, Sc, Gd, Sm, Ca, Ce, Nb, Mg, B, et Mo,
et
p et q sont respectivement tels que 5≤p≤7 et 0≤q≤0,4 ;
[Formule 2] Liₓ[Ni_{y}Co_{z}Mn_{w}M²ᵥ]Oᵤ
dans la Formule 2,
M² est un ou plusieurs éléments sélectionnés parmi le groupe consistant en W, Cu, Fe, V, Cr, Ti, Zr, Zn, Al, In, Ta, Y, La, Sr, Ga, Sc, Gd, Sm, Ca, Ce, Nb, Mg, B, et Mo,
et
x, y, z, w, v et u sont respectivement tels que 1,0≤x≤1,30, 0,1≤y≤0,95, 0,01≤z≤0,5, 0<w≤0,5, 0≤v≤0,2, et 1,5≤u≤4,5.

2. Batterie selon la revendication 1, dans laquelle l'additif d'électrode positive présente un rapport (CC/DC) d'une capacité de charge initiale (CC) sur une capacité de décharge initiale (DC) de 60 à 80, dans laquelle le rapport (CC/DC) de capacité de charge initiale (CC) sur la capacité de décharge initiale (DC) lors de la charge/décharge initiale est déterminé conformément à la description.

3. Batterie selon la revendication 1, dans laquelle la couche de mélange d'électrode positive présente un taux de variation de poids avant et après la charge/décharge initiale de 0,01 à 2,00 %, dans laquelle le taux de variation de poids avant et après la charge/décharge initiale est déterminé conformément à la description.

4. Batterie selon la revendication 1, dans laquelle l'additif d'électrode positive présente une structure tétragonale avec un groupe d'espace de P4₂/nmc.

5. Batterie selon la revendication 1, dans laquelle la couche de mélange d'électrode positive comprend 0,1 à 5 parties en poids d'un matériau conducteur par rapport au poids total de celle-ci.

6. Batterie selon la revendication 1, dans laquelle la couche de mélange d'électrode positive comprend un ou plusieurs matériaux conducteurs sélectionnés parmi le groupe consistant en le graphite naturel, le graphite artificiel, le noir de carbone, le noir d'acétylène, le noir de Ketjen, et la fibre de carbone.

7. Batterie selon la revendication 1, dans laquelle la couche de mélange d'électrode négative comprend un matériau carboné et un matériau en silicium, et
la teneur en matériau en silicium est de 1 à 20 parties en poids par rapport à 100 parties en poids de la couche de mélange d'électrode négative.

8. Batterie selon la revendication 7, dans laquelle le matériau carboné comprend un ou plusieurs éléments sélectionnés parmi le groupe consistant en le graphite naturel, le graphite artificiel, le graphène, les nanotubes de carbone, le noir de carbone, le noir d'acétylène, le noir de Ketjen et la fibre de carbone.

9. Batterie selon la revendication 8, dans laquelle le matériau en silicium comprend une ou plusieurs parmi des particules de silicium (Si) et des particules d'oxyde de silicium (SiOx, 1≤x≤2).

10. Procédé de fabrication d'une batterie secondaire au lithium selon l'une quelconque des revendications 1 à 9, comprenant une étape consistant à :
appliquer un courant de 1C ou moins à une batterie secondaire au lithium, laquelle inclut une électrode positive incluant un collecteur de courant d'électrode positive ; et une couche de mélange d'électrode positive disposée sur le collecteur de courant d'électrode positive et contenant un matériau actif d'électrode positive et un additif d'électrode positive représenté par la Formule 1 ci-dessous, et
une électrode négative incluant un collecteur de courant d'électrode négative ; et une couche de mélange d'électrode négative disposée sur le collecteur de courant d'électrode négative, afin de charger initialement la batterie secondaire au lithium,
dans lequel, lors de la charge/décharge initiale, le rapport (CC/DC) d'une capacité de charge initiale (CC) sur une capacité de décharge initiale (DC) de l'additif d'électrode positive est de 50 à 100, dans lequel le rapport (CC/DC) de la capacité de charge initiale (CC) sur la capacité de décharge initiale (DC) lors de la charge/décharge initiale est déterminé conformément à la description ;
l'étape de charge initiale est effectuée dans une condition de température de 20 à 70 °C ;
l'étape de charge initiale est effectuée sur la batterie secondaire au lithium dans une condition de pression de 490 à 88260 kPa (5 à 900 kgf/cm²) ; et,
et dans lequel l'étape de charge initiale comprend :
une première étape d'activation pour appliquer un courant de 0,05C à 0,2C à une batterie secondaire au lithium pour charger jusqu'à un SOC de 30 % ou moins ;
une deuxième étape d'activation pour appliquer un courant de 0,3C à 0,5C à la batterie secondaire au lithium qui a subi la première activation pour charger jusqu'à un SOC de plus de 30 % et inférieur à 70 % ; et
une troisième étape d'activation pour appliquer un courant de 0,6C à 0,9C à la batterie secondaire au lithium qui a subi la deuxième activation pour charger jusqu'à un SOC de 70 % ou plus :
[Formule 1] LiₚCo_{(1-q)}M¹_{q}O₄
dans la Formule 1,
M¹ est un ou plusieurs éléments sélectionnés parmi le groupe consistant en W, Cu, Fe, V, Cr, Ti, Zr, Zn, Al, In, Ta, Y, La, Sr, Ga, Sc, Gd, Sm, Ca, Ce, Nb, Mg, B, et Mo, et
p et q sont respectivement tels que 5≤p≤7 et 0≤q≤0,4.
